(19) Europäisches Patentamt

European Patent Office

Office européen des brevets

(11) **EP 1 672 907 A1**

(12) **EUROPEAN PATENT APPLICATION**
published in accordance with Art. 158(3) EPC

(43) Date of publication:
**21.06.2006 Bulletin 2006/25**

(51) Int Cl.:
*H04N 1/40* (1968.09)   *H04N 1/387* (1985.01)
*G06T 3/40* (1995.01)   *H04N 5/262* (1985.01)

(21) Application number: **04746648.7**

(22) Date of filing: **30.06.2004**

(86) International application number:
**PCT/JP2004/009179**

(87) International publication number:
**WO 2005/036868 (21.04.2005 Gazette 2005/16)**

(84) Designated Contracting States:
**DE FR GB**

(30) Priority: **07.10.2003 JP 2003347944**

(71) Applicant: **MITSUBISHI DENKI KABUSHIKI KAISHA**
**Tokyo 100-8310 (JP)**

(72) Inventors:
• **Yamanaka, Satoshi,**
  **Mitsubishi Denki K.K.**
  **Chiyoda-ku, Tokyo 1008310 (JP)**

• **Okuno, Yoshiaki,**
  **Mitsubishi Denki K.K.**
  **Chiyoda-ku, Tokyo 1008310 (JP)**
• **Someya, Jun,**
  **Mitsubishi Denki K.K.**
  **Chiyoda-ku, Tokyo 1008310 (JP)**

(74) Representative: **Whitlock, Holly Elizabeth Ann**
**R G C Jenkins,**
**26 Caxton Street**
**London SW1H 0RJ (GB)**

(54) **PIXEL INTERPOLATION CIRCUIT AND PIXEL INTERPOLATION METHOD, AND IMAGE READER**

(57)   A pixel interpolation circuit according to this invention includes a plurality of interpolation circuits each calculating interpolation candidate data of a interpolation pixel and test interpolation data of a plurality of pixels neighboring the interpolation pixel using different interpolation methods, a determining circuit for selecting one of the interpolation circuits based on a difference between the test interpolation data and actual pixel data, and an output circuit for outputting the interpolation candidate data calculated by the selected interpolation circuit as the interpolation pixel data.

FIG.1

# EP 1 672 907 A1

**Description**

BACKGROUND OF THE INVENTION

Field of the Invention

This invention is related to an image processing method applied to an image scanner using an image sensor, and particularly to a method of generating interpolation pixel data for a digital image.

Description of the Related Art

In an image scanner using an image sensor, a pixel interpolation process is performed to interpolate a lost pixel. Interpolation pixel data is obtained by averaging pixel data neighboring the lost pixel, or calculating a regression line of pixels neighboring the lost pixel using a least-square method. Moreover, as described in Japanese a Laid-Open Open Patent Publication 2003-101724, the pixel interpolation data is also obtained by calculating a biquadratic curve of four pixels neighboring the interpolation pixel.

There are various methods for obtaining the interpolation pixel data, however, a conventional pixel interpolation circuit has a following problem. Since the conventional pixel interpolation circuit calculates the interpolation pixel data using a fixedmethod without considering an image characteristic, for example, a difference between original pixels and interpolation pixels (interpolation error) becomes large in an image area forming outlines, and an image quality is deteriorated.

The present invention has been made in order to solve above problems and to provide a pixel interpolation circuit, which is able to calculate an interpolation pixel data without causing the interpolation error for images having various characteristics.

SUMMARY OF THE INVENTION

A pixel interpolation circuit according to this invention includes a plurality of interpolation circuits each calculating interpolation candidate data of a interpolation pixel and test interpolation data of a plurality of pixels neighboring the interpolation pixel using different interpolation methods, a determining circuit for selecting one of the interpolation circuits based on a difference between the test interpolation data and actual pixel data and an output circuit for outputting the interpolation candidate data calculated by the selected interpolation circuit as the interpolation pixel data.

A pixel interpolation method according to this invention comprising calculating interpolation candidate data of a interpolation pixel and test interpolation data of a plurality of pixels neighboring the interpolation pixel, using different interpolation methods, selecting one of the interpolation methods based on a difference between the test interpolation data and actual pixel data, and outputting the interpolation candidate data calculated by the selected interpolation method as the interpolation pixel data.

BRIEF DESCRIPTION OF DRAWINGS

Fig. 1 is a block diagram illustrating a configuration of a pixel interpolation circuit according to this invention; Fig. 2 is a flow chart illustrating a process of a pixel interpolation calculation;
Fig. 3 is a diagram illustrating an example of test pixels;
Fig. 4 is a flow chart illustrating a calculation process of determination data;
Fig. 5 is a table illustrating a relation between the test pixels and the determination data;
Fig. 6 is a flow chart illustrating a calculation process of determination data;
Fig. 7 is a table illustrating a relation between interpolation circuits and the determination data;
Fig. 8 is a block diagram illustrating a configuration of a pixel interpolation circuit according to the invention;
Fig. 9 is a diagram illustrating an example of original image data and input image data;
Fig. 10 is a diagram for explaining an interpolation calculation;
Fig. 11 is a diagram for explaining methods for calculating test interpolation data and interpolation candidate data using a left/right averaging interpolation circuit;
Fig. 12 is a diagram for explaining methods for calculating test interpolation data and interpolation candidate data using a rightward up averaging interpolation circuit;
Fig. 13 is a table illustrating values of determination data M1 and M2;
Fig. 14 is a table illustrating values of evaluation data S1 and S2;

Fig. 15 is a block diagram illustrating a configuration of a pixel interpolation circuit according to the invention; Fig. 16 is a diagram illustrating an example of original image data and input image data;
Fig. 17 is a diagram for explaining methods for calculating test interpolation data and interpolation candidate data using a leftward up averaging interpolation circuit;
Fig. 18 is a table illustrating values of determination data M1 - M4;
Fig. 19 is a table illustrating values of evaluation data S1 - S3;
Fig. 20 is a table illustrating values of determination data M1 and M2; and
Fig. 21 is a table illustrating values of evaluation data S1 - S3.

Description of the Symbols

Preferred

DETAILED DESCRIPTION OF THE PREFERRED EMBODIMENTS

Embodiment 1

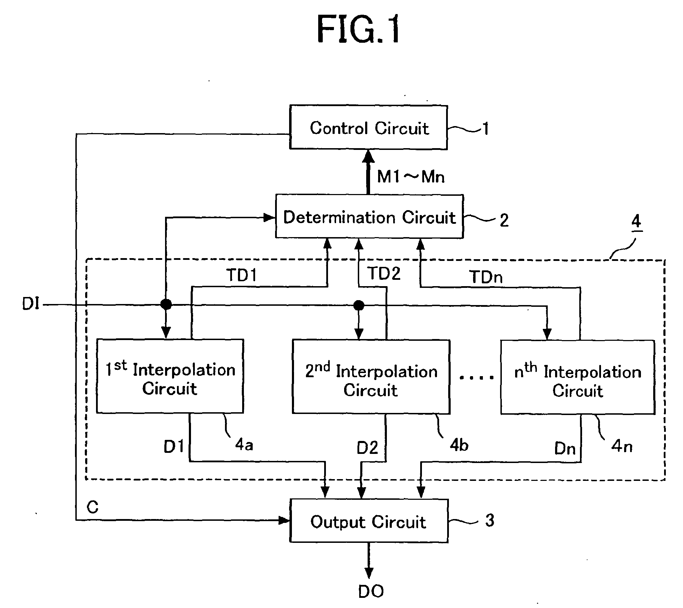

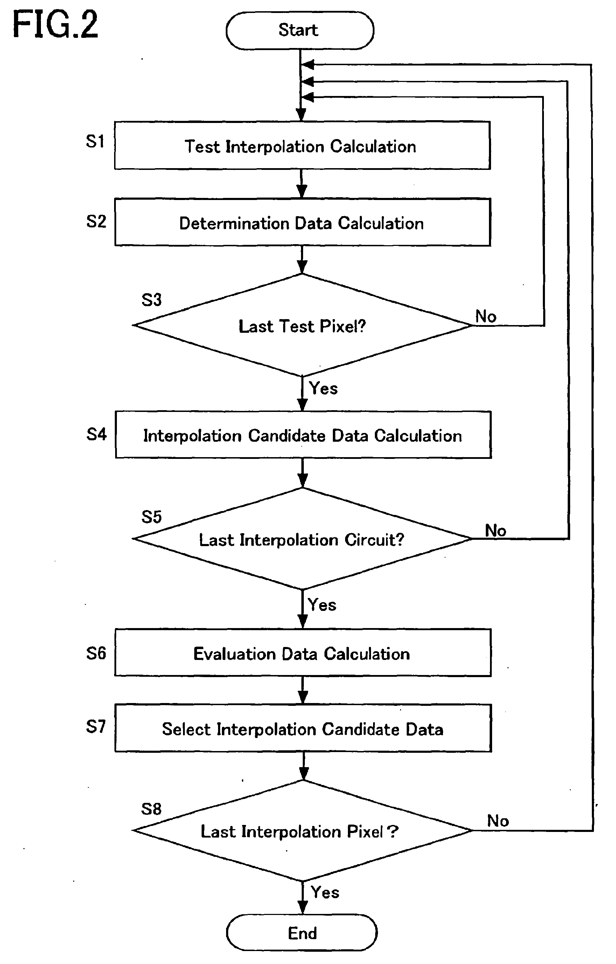

Fig. 1 is a block diagram illustrating a configuration of a pixel interpolation circuit according to this invention. The pixel interpolation circuit illustrated in Fig. 1 includes a control circuit 1, a determination circuit 2, an output circuit 3, and an interpolation unit 4. The interpolation unit 4 includes 1st-nth interpolation circuits 4a-4n (n is an integer greater than 2), each of which performs different interpolation processes. Image data DI read by a scanner or a copy machine is sent to the determination circuit 2 and the interpolation unit 4. The image data DI sent to the interpolation unit 4, is sent to each of the 1st-nth interpolation circuits 4a-4n. Fig. 2 is a flow chart illustrating a process of the pixel interpolation performed by the pixel interpolation circuit illustrated in Fig. 1.

Firstly, in the 1st interpolation circuit 4a, a test interpolation calculation is performed over pixels T1-Tm (hereinafter, referred to as test pixels) neighboring one of lost pixels included in the image data DI so as to calculate test interpolation data TD1[T1] - TD1[Tm] (Step 1).

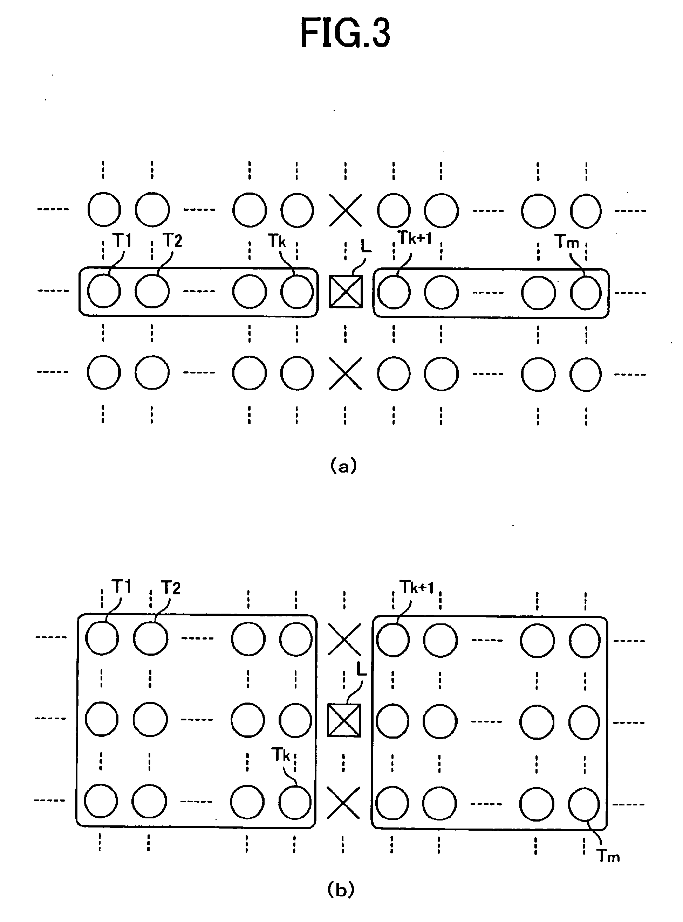

Fig. 3 is a pattern diagram illustrating an example of lost pixels and test pixels. In Fig.3, lost pixels are represented with symbol "X", and non-lost pixels are represented with symbol "○ ". "L" is one of the lost pixels to be interpolated, and non-lost pixels T1 - Tm (m = 2 x k) neighboring the lost pixel are used as the test pixels. Fig. 3 (a) illustrates an example in which the non-lost pixels T1 - Tm located in left and right sides of the lost pixel L are used as the test pixels. Fig. 3 (b) illustrates an example in which non-lost pixels located in left and right sides of the lost pixel L in both vertical and horizontal directions are used as the test pixels.

The test interpolation calculation is performed by calculating interpolation pixel data for each of the test pixels on the assumption that the test pixels T1 - Tm are lost. For example, the test interpolation data TD1[T1] of the test pixel T1 is obtained by calculating an interpolation pixel data using the non-lost pixels neighboring the test pixel T1.

The test interpolation data TD1[T1] - TD1[Tm] (indicated as TD1 in Fig.1) calculated by the 1st interpolation circuit 4a is sent to the determination circuit 2. The determination circuit 2 calculates determination data M1[T1] - M1[Tm] that represent differences between the test interpolation data TD1[T1] - TD1[Tm] and data values DI[T1] - DI[Tm] of the test pixels T1-Tm (Step 2). The determination data M1[T1] - M1[Tm] is sent to the control circuit 1.

When the test interpolation data TD1[Tm] and the determination data M1[T1] - M1[Tm] are calculated for the last test pixel Tm (Step 3), the first interpolation circuit 4a performs an interpolation calculation over the lost pixel L, so as to calculate an interpolation candidate data D1 (Step 4). The interpolation candidate data D1 is sent to the output circuit 3.

The above-described processes of Step 1 - Step 4 are similarly performed in the 2nd-nth interpolation circuits 4b-4n (Step 5). In other words, the test interpolation data, TD2[T1] - TD2[Tm], ... TDn[T1] - TDn[Tm] (indicated as TD2 - TDn in Fig.1), are calculated in the 2nd-nth interpolation circuits 4b-4n and sent to the determination circuit 2. The determination circuit 2 calculates the determination data, M2[T1] - M2[Tm], ... Mn[T1] - Mn[Tm], for the test interpolation data TD2 - TDn. Then, interpolation candidate data D2 - Dn for the lost pixel L are calculated in the 2nd-nth interpolation circuits 4b-4n and send to the output circuit 3.

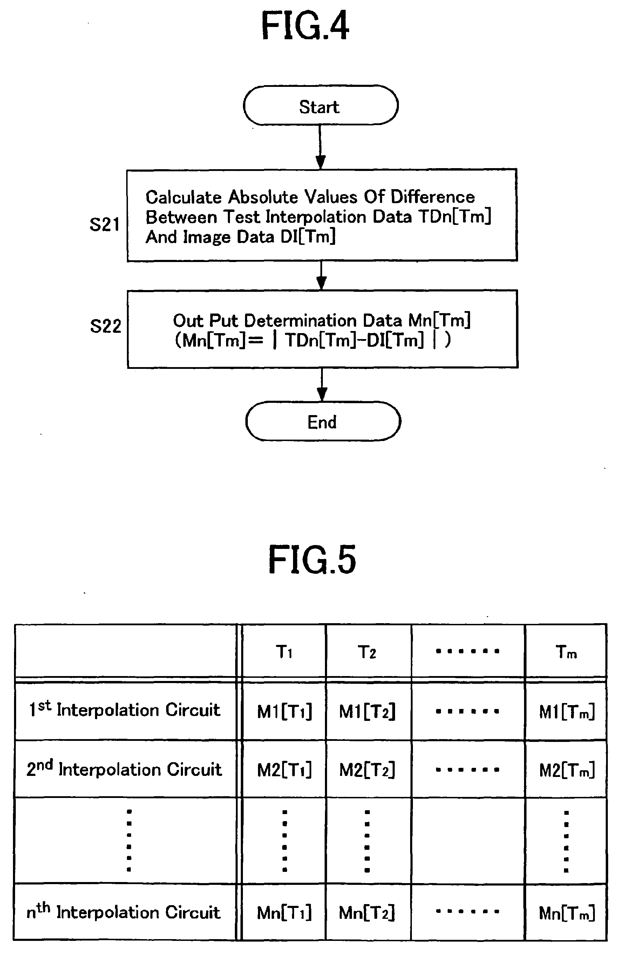

Fig. 4 is a flow chart illustrating a calculation process of the determination data in Step 2.

The determination circuit 2 calculates the absolute values of the differences between the test interpolation data TD1[T1] - TD1[Tm] and the values DI[T1] - DI[Tm] of the test pixels T1 - Tm (Step 21), respectively, and outputs the absolute values as the determination data M1[T1] - M1[Tm] (Step 22) . The determination data M1[T1] - M1[Tm] are calculated using the following Formulas (1).
Formulas (1):

$$M1[T1] = |TD1[T1] - DI[T1]| \ldots M1[Tm] = |TD1[Tm] - DI[Tm]|$$

The determination circuit 2 also performs processes of Step 21 and Step 22 for the test interpolation data, TD2 [T1] - TD2[Tm], ... TDn[T1] - TDn[Tm], calculated by the 2nd-nth interpolation circuits 4b-4n, so as to calculate the determination data M2[T1] - M2[Tm], ... Mn[T1] - Mn[Tm].

Fig. 5 is a table representing all the determination data calculated by the determination circuit 2. As sown in Fig. 5, the determination data is calculated for each of the nxm test interpolation data of the test pixels T1 - Tm calculated by the 1st-nth interpolation circuits 4a-4n.

Next, the determination data M1[T1] - M1[Tm], ... Mn[T1] - Mn[Tm] are evaluated in the control circuit 1 (Step 6).

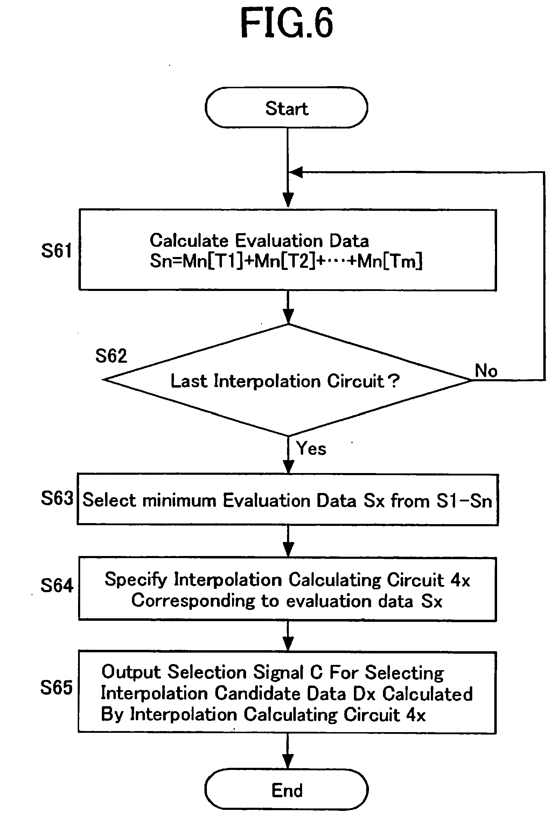

Fig. 6 is a flow chart illustrating a process of evaluating determination data in Step 6.

Firstly, the control circuit 1 calculates evaluation data S1 for the 1st interpolation circuit 4a by summing up the determination data M1[T1] - M1[Tm] (Step 61) .

The control circuit 1 similarly calculates evaluation data S2- Sn for the 2nd-nth interpolation circuits 4b-4n (Step 62).

Calculations of the evaluation data S1 - Sn are represented by the following Formulas (2).
Formulas (2):

$$S1 = M1[T1] + M1[T2] \ldots + M1[Tm]$$

$$\ldots$$

$$Sn = Mn[T1] + Mn[T2] \ldots + Mn[Tm]$$

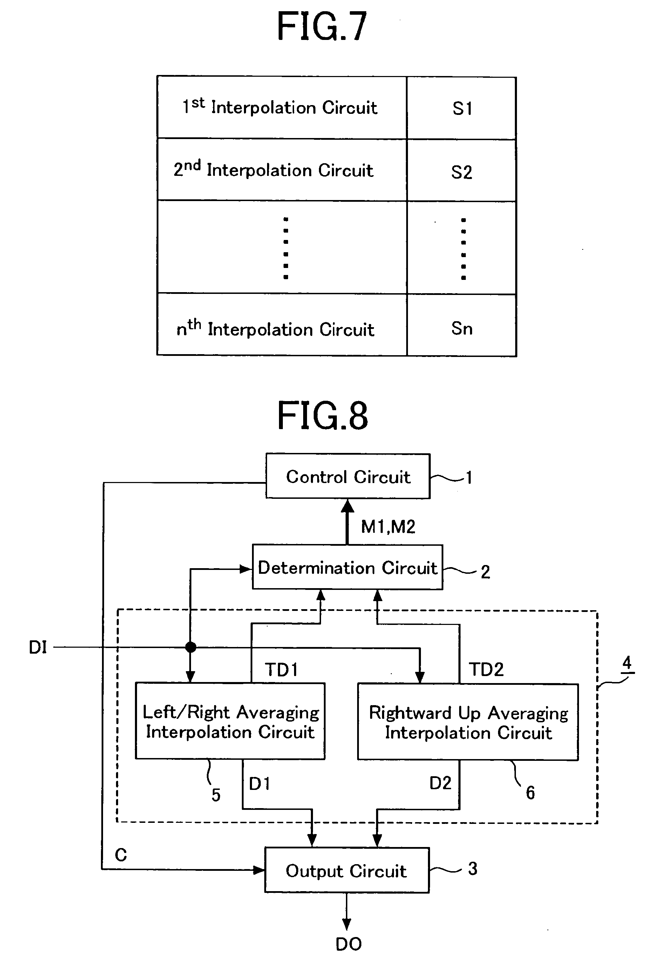

Fig. 7 is a diagram showing relations between the 1st-nth interpolation circuits 4b-4n and the evaluation data S1 - Sn.

Next, the control circuit selects minimal evaluation data Sx from the evaluation data S1 - Sn (Step 63), and then specifies an interpolation circuit 4x corresponding to the evaluation data Sx (Step 64) . The smaller a difference between the test interpolation data and actual image data is, the smaller the evaluation data becomes. Therefore, the interpolation circuit 4x with the smallest evaluation data is estimated to have highest interpolation aptitude, which means the interpolation error becomes smallest. The control circuit 1 sends a selection signal C for selecting interpolation candidate data Dx calculated by the interpolation circuit 4x to the output circuit 3 (Step 65).

The output circuit 3 selects the interpolation candidate data Dx according to the selection signal C, and outputs as interpolation data DO (Step 7).

The processes of Step 1 - Step 7 are performed for all the lost pixels to calculate interpolation pixel data DO.

Fig. 8 is a block diagram illustrating a detailed configuration of the pixel interpolation unit 4 according to the invention. The interpolation unit 4 illustrated in Fig. 8 includes a left/right averaging interpolation circuit 5 and a rightward up averaging interpolation circuit 6.

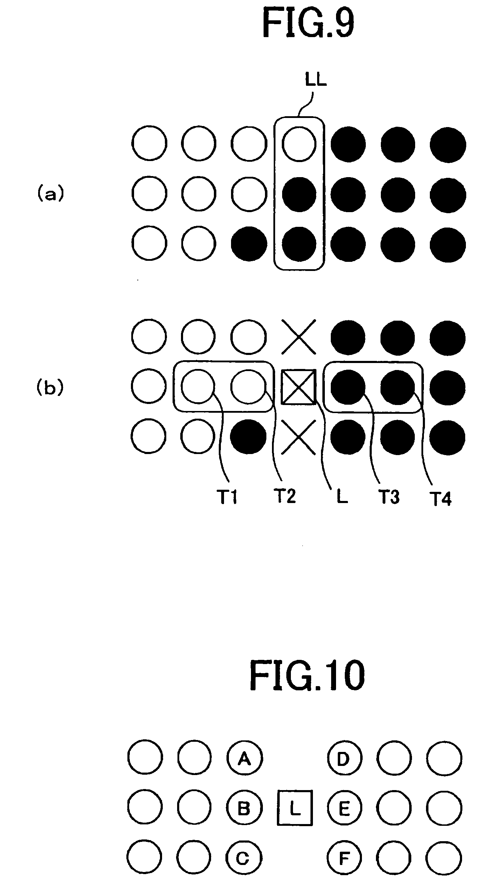

Fig. 10 is a diagram for explaining an interpolation method of the left/right averaging interpolation circuit 5 and the rightward up averaging interpolation circuit 6. In Fig. 10, "L" represents a lost pixel to be interpolated by an interpolation calculation, and pixels "A"-"F" represent pixels neighboring the lost pixel L.

The left/right averaging interpolation circuit 5 calculates an average value XL of pixels B and E located in left and right sides of the lost pixel L, and the rightward up averaging interpolation circuit 6 calculates an average value of pixels D and C. The average values XL calculated by the left/right averaging interpolation circuit 5 and the rightward up averaging interpolation circuit 6 are represented by the following Formulas (3) and (4), wherein data values (gradation values) of the pixels A- F are represented as XA - XF, respectively.

$$XL = (XB + XE)/2 \ldots\text{Formula (3)}$$

$$XL = (XC + XD)/2 \ldots\text{Formula (4)}$$

Fig. 9 is a pattern diagram illustrating an example of image data input into the interpolation circuit. In Figs. 9, non-lost pixels are represented with symbol "O" and symbol **"●",** and lost pixels are represented with symbol "×". Fig. 9(a) illustrates an original image, and Fig. 9 (b) illustrates a state in which pixels illustrated in a portion "LL" is lost. The original image in the lost portion LL represents a rightward up outline. The gradation value of each of the pixels is represented by 8 bit (0 - 255) data, and pixels illustrated as "○" has a gradation value 255, and pixels illustrated as **"●"** has a gradation value 0.

Hereinafter, a process of calculating an interpolation pixel data of the lost pixel L illustrated in Fig. 9 (b) is explained. Here, as illustrated in Fig. 9 (b), pixels T1 - T4 each located in the left and right sides of the lost pixel L are used as the test pixels.

The left/right averaging interpolation circuit 5 calculates test interpolation data TD1[T1] - TD1[T4] for the test pixels T1 - T4 illustrated in Fig. 9 (b), using the Formula (3).

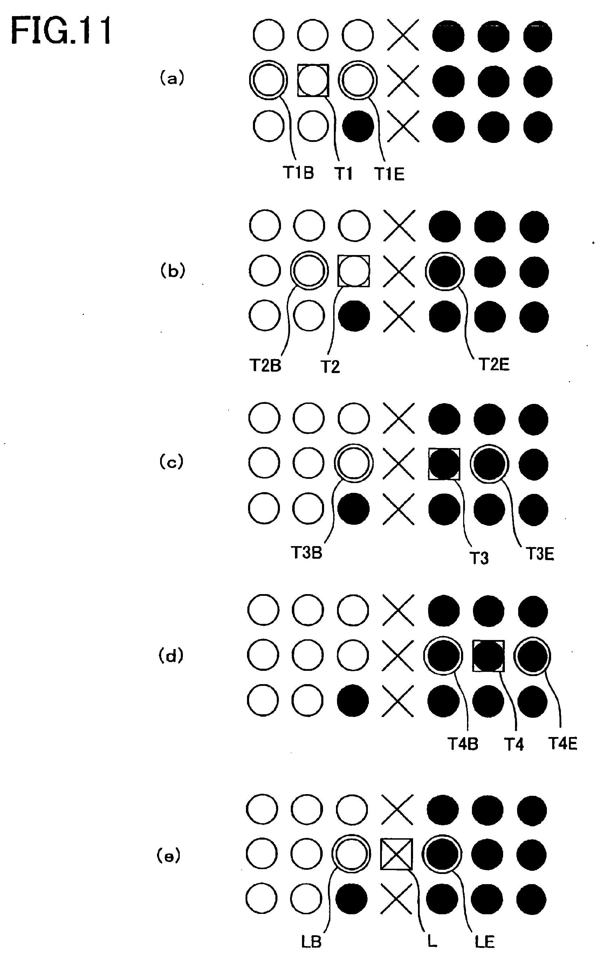

Fig. 11 is a diagram for explaining methods for calculating test interpolation data and interpolation candidate data using the left/right averaging interpolation circuit 5.

The test interpolation data TD1[T1] for the test pixel T1 is obtained by calculating the average value of pixels "T1B" and "T1E" located in left and right sides of the test pixel T1 as illustrated in Fig. 11 (a).

The test interpolation data TD1[T2] for the test pixel T2 is obtained by calculating the average value of pixels "T2B" and "T2E" located in left and right sides of the test pixel T2 as illustrated in Fig. 11 (b).

The test interpolation data TD1[T3] for the test pixel T3 is obtained by calculating the average value of pixels "T3B" and "T3E" located in left and right sides of the test pixel T3 as illustrated in Fig. 11 (c).

The test interpolation data TD1[T4] for the test pixel T4 is obtained by calculating the average value of pixels "T4B" and "T4E" located in left and right sides of the test pixel T4 as illustrated in Fig. 11 (d).

Therefore, the test interpolation data TD1[T1] - TD1[T4] are calculated as follows;

$$TD1[T1] = (T1B + T1E) / 2 = (255 + 255) / 2 = 255$$

$$TD1[T2] = (T2B + T2E) / 2 = (255 + 0) / 2 = 127.5$$

$$TD1[T3] = (T3B + T3E) / 2 = (255 + 0) / 2 = 127.5$$

$$TD1[T4] = (T4B + T4E) / 2 = (0 + 0) / 2 = 0$$

As illustrated in Fig. 11 (e), the interpolation candidate data D1 is calculated by averaging pixels LB and LE on the left and right sides of the lost pixel L as follows;

$$D1 = (LB + LE) / 2 = (255 + 0) / 2 = 127.5$$

The determination circuit 2 obtains the determination data M1[T1] -M1[T4] by calculating the absolute values of the differences between the test interpolation data TD1[T1] - TD1[T4] and the values DI[T1] - DI[T4] of the test pixels T1 - T4.

The determination data M1[T1] - M1[T4] are calculated as follows.

$$M1[T1] = |TD1[T1] - DI[T1]| = |255 - 255| = 0$$

$$M1[T2] = |TD1[T2] - DI[T2]| = |127.5 - 255| = 127.5$$

$$M1[T3] = |TD1[T3] - DI[T3]| = |127.5 - 0| = 127.5$$

$$M1[T4] = |TD1[T4] - DI[T4]| = |0 - 0| = 0$$

The rightward up averaging interpolation circuit 6 calculates test interpolation data TD1[T1] - TD1[T4] for the test pixels T1 - T4 illustrated in Fig. 9 (b), using Formula (4).

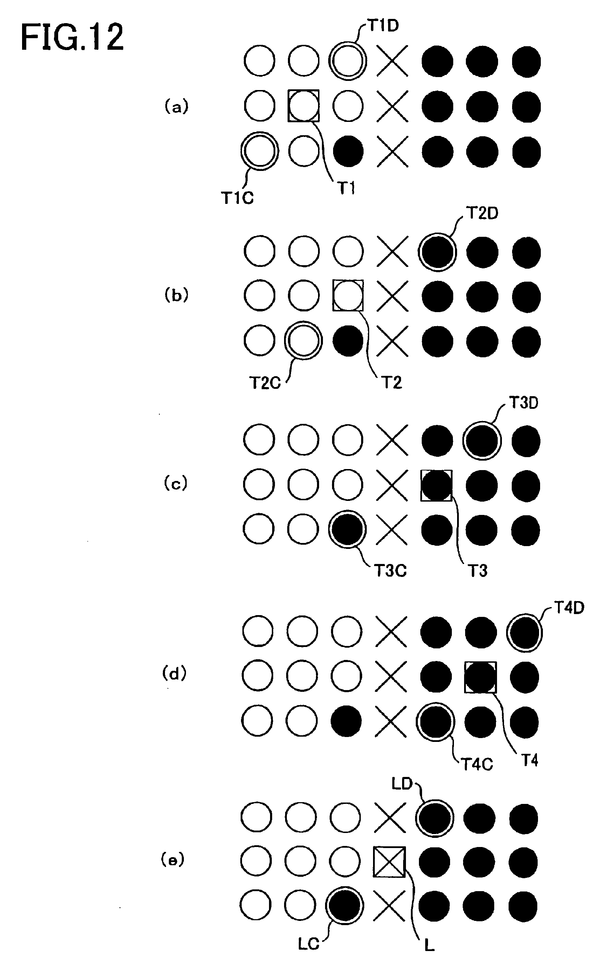

Figs. 12 are diagrams for explaining methods for calculating test interpolation data and interpolation candidate data using the rightward up averaging interpolation circuit 6.

The test interpolation data TD2[T1] for the test pixel T1 is obtained by calculating the average value of pixels "T1D" and "T1C" located in upper right and lower left positions of the test pixel T1 as illustrated in Fig. 12 (a).

The test interpolation data TD2[T2] for the test pixel T2 is obtained by calculating the average value of pixels "T2D" and "T2C" located on the rightward up and leftward down positions of the test pixel T2 as illustrated in Fig. 12 (b).

The test interpolation data TD2[T3] for the test pixel T3 is obtained by calculating the average value of pixels "T3D" and "T3C" located on the rightward up and leftward down positions of the test pixel T3 as illustrated in Fig. 12 (c).

The test interpolation data TD2[T4] for the test pixel T4 is obtained by calculating the average value of pixels "T4D" and "T4C" located on the rightward up and leftward down positions of the test pixel T4 as illustrated in Fig. 12 (d).

Therefore, the test interpolation data TD1[T1] - TD1[T4] is calculated as follows;

$$TD2[T1] = (T1C + T1D) / 2 = (255 + 255) / 2 = 255$$

$$TD2[T2] = (T2C + T2D) / 2 = (255 + 0) / 2 = 127.5$$

$$TD2[T3] = (T3C + T3D) / 2 = (255 + 0) / 2 = 127.5$$

$$TD2[T4] = (T4C + T4D) / 2 = (0 + 0) / 2 = 0$$

As illustrated in Fig. 12 (e), the interpolation candidate data D2 is calculated by averaging pixels LD and LC located on the rightward up and leftward down positions of the lost pixel L as follows;

$$D2 = (LC + LD) / 2 = (0 + 0) / 2 = 0$$

The determination circuit 2 obtains the determination data M2[T1] - M2[T4] by calculating the absolute values of the differences between the test interpolation data TD2[T1] - TD2[T4] and the values DI[T1] - DI[T4] of the test pixels T1 - T4.

The determination data M2[T1] - M2[T4] is calculated as follows;

$$M2[T1] = |TD2[T1] - DI[T1]| = |255 - 255| = 0$$

$$M2[T2] = |TD2[T2] - DI[T2]| = |127.5 - 255| = 127.5$$

$$M2[T3] = |TD2[T3] - DI[T3]| = |0 - 0| = 0$$

$$M2[T4] = |TD2[T4] - DI[T4]| = |0 - 0| = 0$$

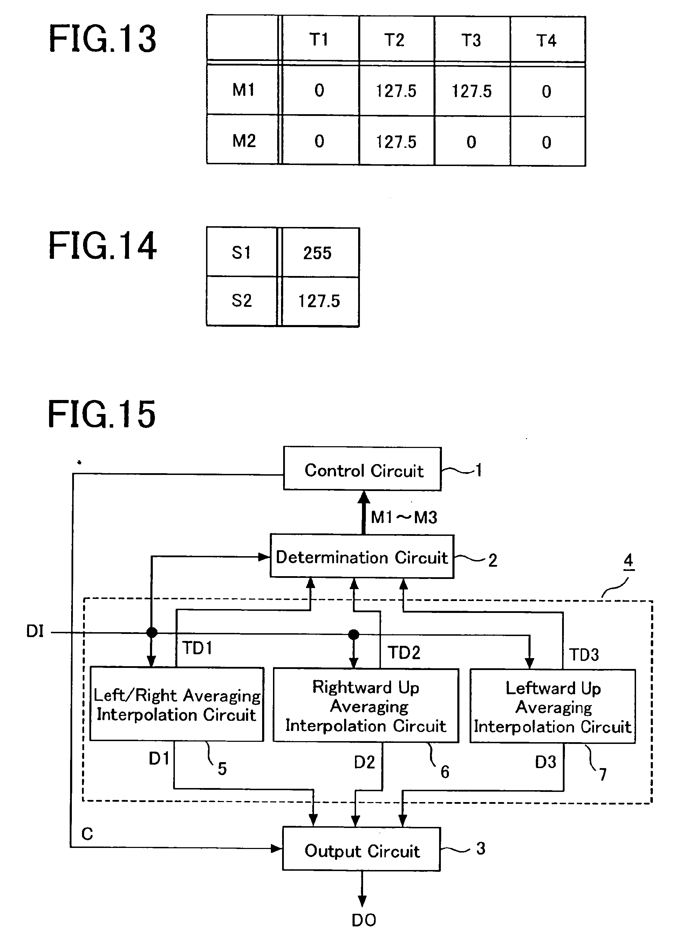

Fig. 13 is a table showing values of determination data M1 and M2 of the test pixels T1 - T4 calculated as described above.

The control circuit 1 adds up the determination data M1[T1] - M1[T4], and calculates the evaluation data S1 for evaluating the interpolation aptitude of the left/right averaging interpolation circuit 5.

The evaluation data S1 is given as follows;

$$S1 = M1[T1] + M1[T2] + M1[T3] + M1[T4]$$
$$= 0 + 127.5 + 127.5 + 0 = 255$$

In a similar way, the control circuit 1 adds up the determination data M2[T1] - M2[T4], and calculates the evaluation data S2 for evaluating the interpolation aptitude of the rightward up averaging interpolation circuit 6.

The evaluation data S2 is given as follows;

$$S2 = M2[T1] + M2[T2] + M2[T3] + M2[T4]$$
$$= 0 + 127.5 + 0 + 0 = 127.5$$

Fig. 14 is a table showing the evaluation data S1 of the left/right averaging interpolation circuit 5 and the evaluation data S2 of the rightward up averaging interpolation circuit 6. As illustrated in Fig. 14, the evaluation data S2 of the rightward up averaging interpolation circuit 6 has the smallest value. As described above, the smaller the difference between the test interpolation data and actual image data is, the smaller the evaluation data becomes. Because the original image data illustrated in Fig. 9 (a) has a rightward up outline, the rightward up averaging interpolation circuit 6 is estimated to have the highest interpolation aptitude. The evaluation data shown in Fig. 14 also indicates that the rightward up averaging interpolation circuit 6 has the highest interpolation aptitude.

The control circuit 1 selects the evaluation data S2, and specifies the rightward up averaging calculating circuit 6 corresponding to this evaluation data. The control circuit 1 sends the selection signal C for selecting the interpolation candidate data D2 for the lost pixel L calculated by the rightward up averaging interpolation circuit 6 to the output circuit 3.

According to the selection signal C, the output circuit 3 outputs the interpolation candidate data D2 (D2 = 0) calculated by the rightward up averaging interpolation circuit 6 as the interpolation pixel data DO (DO = 0).

As illustrated in Figs. 9, a data value of the lost pixel L in the original image is 0, which means that the interpolation candidate data D2 (D2 = 0) calculated by the rightward up averaging interpolation circuit 6 has smaller error than the interpolation candidate data D1 (D1 = 127.5) calculated by the left/right averaging interpolation circuit 5.

As described above, by selecting the interpolation candidate data calculated by the different interpolation methods, based on the results of the test interpolation calculations, the interpolation pixel data can be accurately calculated using the most suitable interpolation method in accordance with an outline neighboring the interpolation pixel.

Embodiment 2

Fig. 15 is a block diagram illustrating another configuration of the interpolation unit 4. The interpolation unit 4 of the pixel interpolation circuit illustrated in Fig. 1 includes a left/right averaging interpolation circuit 5, a rightward up averaging interpolation circuit 6, and a leftward up averaging interpolation circuit 7. The left/right averaging interpolation circuit 5 and the rightward up averaging interpolation circuit 6 calculate the test interpolation data and the interpolation candidate data using the methods described in the Embodiment 1.

The leftward up averaging interpolation circuit 7 calculates average values of pixels located on the leftward up and rightward down positions of a pixel to be interpolated. In other words, the circuit calculates the average value "XL" of pixels "A" and "F" located on the leftward up and rightward down positions of the pixel L. The average value XL calculated by the leftward up averaging interpolation circuit 7 is represented by the following Formula (5), wherein data values (gradation values) of pixels A and F are represented as XA and XF, respectively.

$$XL = (XA + XF)/2 \ldots Formula\ (5)$$

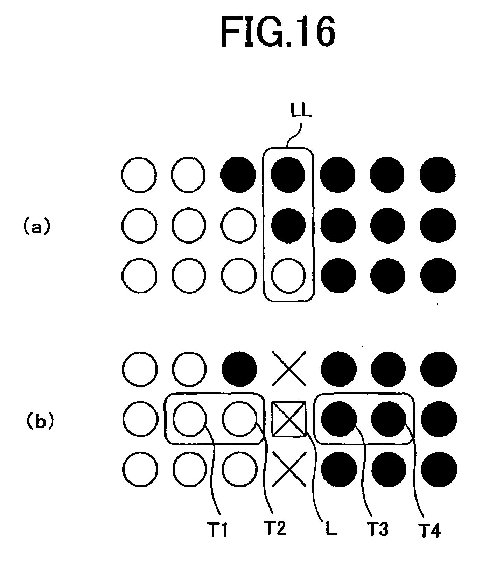

Fig. 16 is a pattern diagram illustrating another example of image data input into the interpolation circuit. In Figs. 16, non-lost pixels are represented with symbol "O" and symbol "●", and lost pixels are represented with symbol "X". Fig. 16 (a) illustrates an original image, and Fig. 16 (b) illustrates a state in which pixels illustrated in a portion "LL" is lost. The original image in the lost portion LL represents a leftward up outline. The gradation value of each of the pixels is represented by 8 bit (0 - 255) data, and pixels illustrated as "O" has a gradation value 255, and pixels illustrated as "●" has a gradation value 0.

Hereinafter, processes of calculating interpolation pixel data of the lost pixel L illustrated in Fig. 16 (b) are explained. Here, as illustrated in Fig. 16 (b), pixels T1 - T4 each located in the left and right sides of the lost pixel L are used as the test pixels.

The leftward up averaging interpolation circuit 7 calculates test interpolation data TD3[T1] - TD3[T4] for the test pixels T1 - T4 illustrated in Fig. 16 (b), using the Formula (5).

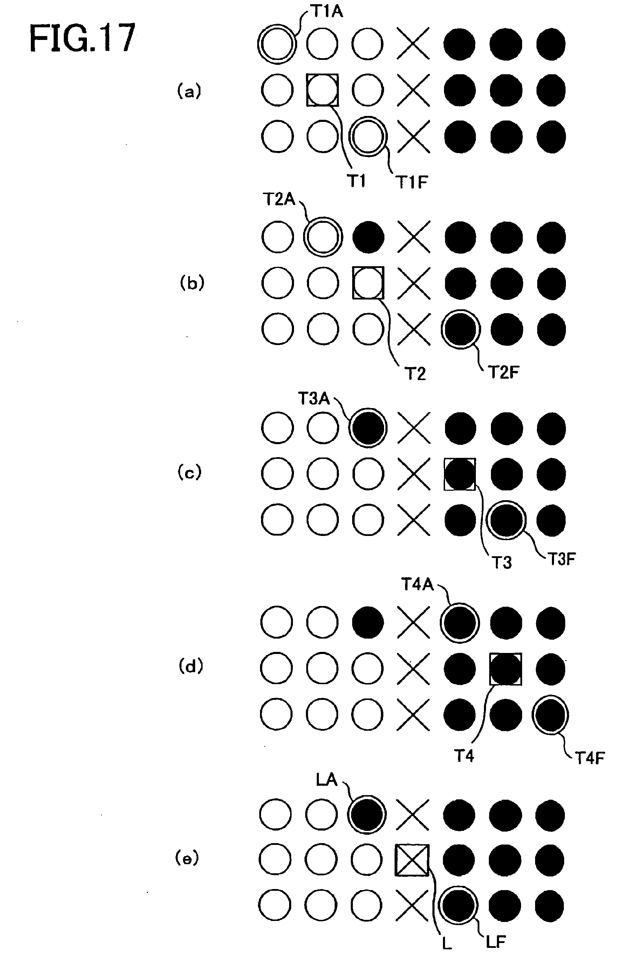

Fig. 17 is a diagram for explaining methods for calculating the test interpolation data and the interpolation candidate data using the leftward up averaging interpolation circuit 7.

The test interpolation data TD3[T1] for the test pixel T1 is obtained by calculating the average value of pixels "T1A" and "T1F" located on the leftward up and rightward down positions of the test pixel T1 as illustrated in Fig. 17 (a).

The test interpolation data TD3[T2] for the test pixel T2 is obtained by calculating the average value of pixels "T2A" and "T2F" located on the leftward up and rightward down positions of the test pixel T2 as illustrated in Fig. 17 (b).

The test interpolation data TD3[T3] for the test pixel T3 is obtained by calculating the average value of pixels "T3A" and "T3F" located on the leftward up and rightward down positions of the test pixel T3 as illustrated in Fig. 17 (c).

The test interpolation data TD3[T4] for the test pixel T4 is obtained by calculating the average value of pixels "T4A" and "T4F" located on the leftward up and rightward down positions of the test pixel T4 as illustrated in Fig. 17 (d).

Therefore, the test interpolation data TD3[T1] - TD3[T4] are calculated as follows;

$$TD3[T1] = (T1A + T1F) / 2 = (255 + 255) / 2 = 255$$

$$TD3[T2] = (T2A + T2F) / 2 = (255 + 0) / 2 = 127.5$$

$$TD3[T3] = (T3A + T3F) / 2 = (0 + 0) / 2 = 0$$

$$TD3[T4] = (T4A + T4F) / 2 = (0 + 0) / 2 = 0$$

As illustrated in Fig. 17 (e), the interpolation candidate data D3 is calculated by averaging pixels LA and LF located on the leftward up and rightward down positions of the lost pixel L as follows;

$$D3 = (LA + LF) / 2 = (0 + 0) / 2 = 0$$

The determination circuit 2 obtains the determination data M1[T1] - M1[T4] by calculating the absolute values of the differences between the test interpolation data TD3[T1] - TD3[T4] and the values DI[T1] - DI[T4] of the test pixels T1 - T4.

The determination data M3[T1] through M3[T4] can be calculated as follows;

$$M3[T1] = |TD3[T1] - DI[T1]| = |255 - 255| = 0$$

$$M3[T2] = |TD3[T2] - DI[T2]| = |127.5 - 255| = 127.5$$

$$M3[T3] = |TD3[T3] - DI[T3]| = |0 - 0| = 0$$

$$M3[T4] = |TD3[T4] - DI[T4]| = |0 - 0| = 0$$

The left/right averaging interpolation circuit 5 and the rightward up averaging interpolation circuit 6 calculate the interpolation candidate data D1 and D2 and the test interpolation data TD1[T1] - TD1[T4] and TD2[T1] - TD21[T4], and the determination circuit 2 calculates determination data M1[T1] - M1[T4] and M2[T1] - M2[T4] based on the test interpolation data. The processes in the left/right averaging interpolation circuit 5 and the rightward up averaging interpolation circuit 6 are described in the Embodiment 1.

Here, the interpolation candidate data D1 calculated by the left/right averaging interpolation circuit 5 is 127.5, and the interpolation candidate data D2 calculated by the rightward up averaging interpolation circuit 6 is 127.5.

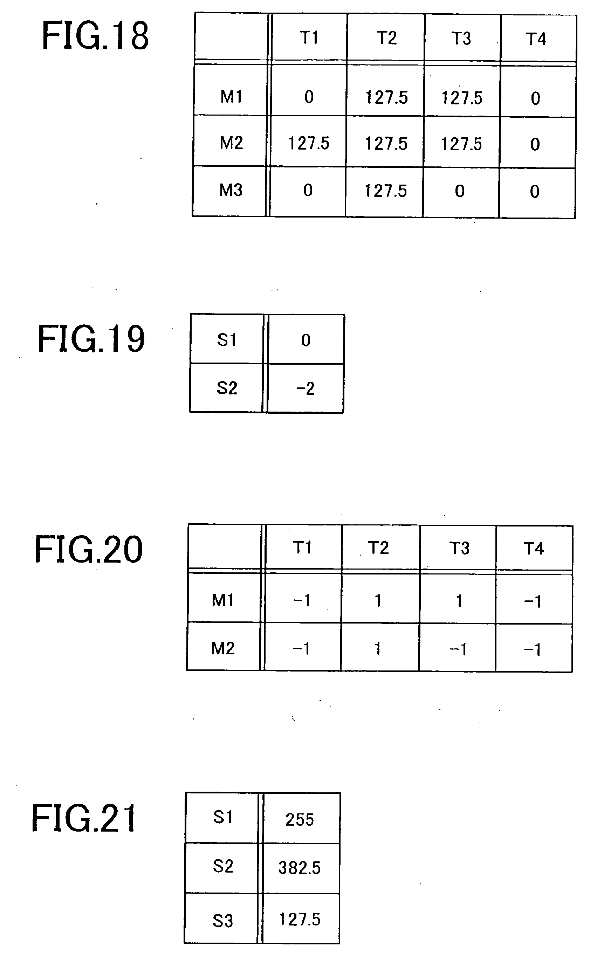

Fig. 18 is a table showing values of determination data M1, M2, and M3 for test pixels T1 - T4.

The control circuit 1 adds up the determination data M1[T1] - M1[T4], and calculates the evaluation data S1 for evaluating the interpolation aptitude of the left/right averaging interpolation circuit 5.

The evaluation data S1 is given as follows;

$$S1 = M1[T1] + M1[T2] + M1[T3] + M1[T4]$$
$$= 0 + 127.5 + 127.5 + 0 = 255$$

In a similar way, the control circuit 1 adds up the determination data M2[T1] - M2[T4], and calculates the evaluation data S2 for evaluating the interpolation aptitude of the rightward up averaging interpolation circuit 6

The evaluation data S2 is given as follows;

$$S2 = M2[T1] + M2[T2] + M2[T3] + M2[T4]$$
$$= 127.5 + 127.5 + 127.5 + 0 = 382.5$$

In a similar way, the control circuit 1 adds up the determination data M3[T1] - M3[T4], and calculates the evaluation data S3 for evaluating the interpolation aptitude of the leftward up averaging interpolation circuit 7.

The evaluation data S3 is given as follows;

$$S3 = M3[T1] + M3[T2] + M3[T3] + M3[T4]$$
$$= 0 + 127.5 + 0 + 0 = 127.5$$

Fig. 19 is a table showing values of the evaluation data S1, S2 and S3, which are calculated for the left/right averaging interpolation circuit 5, the rightward up averaging interpolation circuit 6, and the leftward up averaging interpolation circuit 7. As illustrated in Fig. 19, the evaluation data S3 of the leftward up averaging interpolation circuit 7 has a smallest value. As described above, the smaller the difference between the test interpolation data and actual image data is, the lower the evaluation data becomes. Because the original image data illustrated in Fig. 16 (a) has a rightward up outline, the leftward up averaging interpolation circuit 7 is estimated to have the highest interpolation aptitude. The evaluation data represented in Fig. 19 also indicates that the leftward up averaging interpolation circuit 7 has the highest interpolation aptitude.

The control circuit 1 selects the minimal evaluation data S3, and specifies leftward up averaging interpolation circuit 7 corresponding to this evaluation data. The control circuit sends the selection signal C for selecting the interpolation candidate data D3 calculated by the leftward up averaging interpolation circuit 7 for the lost pixel L to the output circuit 3.

According to the selection signal C, the output circuit 3 outputs the interpolation candidate data D3 (D3 = 0) calculated by the leftward up averaging interpolation circuit 7 as the interpolation pixel data DO (DO = 0).

As illustrated in Figs. 16, a data value of the lost pixel L in the original image is 0, which means that the interpolation candidate data D3 (D3 = 0) calculated by the leftward up averaging interpolation circuit 7 has smaller error than the interpolation candidate data D1 (D1 = 127.5) calculated by the left/right averaging interpolation circuit 5 or the interpolation candidate data D2 (D2 = 127.5) calculated by the rightward up averaging interpolation circuit 6.

As described above, by further providing the leftward up averaging interpolation circuit 7, more accurate interpolation process can be realized. In other words, the most suitable interpolationmethod is used for an image having different characteristics. Furthermore, the pixel interpolation circuit according to this invention can be used for increasing the number of pixels of an input image.

In the interpolation unit 4, the interpolation candidate data may be calculated using methods other than a left/right averaging interpolation, a rightward up average interpolation, or a leftward up average interpolation. For example such a method as calculating interpolation pixel using the least-square method, or calculating interpolation pixel data using a biquadratic curve obtained from four pixels neighboring the interpolation pixel can be used. In the pixel interpolation circuit according to this invention, various kinds of interpolation circuits can further be added to the interpolation unit 4 without drastically modifying a configuration of the whole circuit.

Embodiment 3

Data amount of the determination data to be processed in the determination circuit 2 may be increased when the number of the interpolation circuits composing the interpolation unit 4 is increased. The data amount of the determination data can be decreased, by binarizing or ternarizing the determination data using a predefined threshold value.

As an example, a method of ternarizing the determination data values will be explained.

The determination circuit 2 compares the absolute value of the difference between the test interpolation data TD1[T1] calculated by the first interpolation circuit 4a and the value DI[T1] of the test pixel T1, with two predefined threshold values TH1 and TH2 ($0 \leq$ TH1 < TH2) . When the absolute value is smaller than the threshold value TH1, a value of the determination data M1[T1] is set -1; when the absolute value is larger than the threshold value TH1 and smaller than the threshold value TH2, a value of the determination data is set 0; and when the absolute value is larger than the threshold value TH2, a value of the determination data is set 1.

That is:

$$\text{if } 0 \leq |TD1[T1] - DI[T1]| < TH1,$$

$$M1[T1] = -1;$$

$$\text{if } TH1 \leq |TD1[T1] - DI[T1]| < TH2,$$

$$M1[T1] = 0;$$

and

$$\text{if } TH2 \leq |TD1[T1] - DI[T1]|,$$

$$M1[T1] = 1.$$

The determination circuit 2 similarly calculates the determination data M1[T2] - M1[Tm] for the test pixels T2 - Tm.
That is:

$$\text{if } 0 \leq |TD1[T2] - DI[T2]| < TH1,$$

$$M1[T2] = -1;$$

$$\text{if } TH1 \leq |TD1[T2] - DI[T2]| < TH2,$$

$$M1[T2] = 0;$$

$$\text{if } TH2 \leq |TD1[T2] - DI[T2]|,$$

$$M1[T2] = 1;$$

...

$$\text{if } 0 \leq |TD1[Tm] - DI[Tm]| < TH1,$$

$$M1[Tm] = -1;$$

$$\text{if } TH1 \leq |TD1[Tm] - DI[Tm]| < TH2,$$

$$M1[Tm] = 0;$$

and

$$\text{if } TH2 \leq |TD1[Tm] - DI[Tm]|,$$

$$M1[Tm] = 1.$$

The determination data M1[T1] - M1[Tm] calculated in the above described method represent error of the test interpolation data with three values, -1, 0, and 1. The determination data becomes -1 when the error is small.

The determination circuit 2 similarly calculates the ternarized determination data MD2[T1] - MD2[Tm] for the test interpolation data TD2[T1] - TD2[Tm], ... TDn[T1] - TDn[Tm] calculated by the 2nd-nth interpolation circuits 4b-4n.

Hereinafter, a process of calculating ternarized determination data in the pixel interpolation circuit illustrated in Fig. 8 will be explained. In the following explanation, the interpolation pixel data for the lost pixel L illustrated in Fig. 9 (b) will be calculated, and the threshold values TH1=50 and TH2=100 will be used.

As calculated in Embodiment 1, the absolute values of the differences between the test interpolation data TD1[T1] - TD1[T4] and the values DI[T1] - DI[T4] of the test pixels T1 - T4 are given as follows;

$$|TD1[T1] - DI[T1]| = |255 - 255| = 0$$

$$|TD1[T2] - DI[T2]| = |127.5 - 255| = 127.5$$

$$|TD1[T3] - DI[T3]| = |127.5 - 0| = 127.5$$

$$|TD1[T4] - DI[T4]| = |0 - 0| = 0$$

Relations between these absolute values and the threshold values TH1 (TH1 = 50) and TH2 (TH1 = 100) are shown as follows;

$$|TD1[T1] - DI[T1]| < TH1$$

$$TH2 \leq |TD1[T2] - DI[T2]|$$

$$TH2 \leq |TD1[T3] - DI[T3]|$$

$$|TD1[T4] - DI[T4]| < TH1$$

Therefore, the determination data calculated for the left/right averaging interpolation circuit 5 are given as follows;

$$M1[T1] = -1$$

$$M1[T2] = 1$$

$$M1[T3] = 1$$

$$M1[T4] = -1$$

The absolute values of the differences between the test interpolation data TD1[T1] - TD1[T4] calculated by the rightward up averaging interpolation circuit 6 and the values DI[T1] - DI[T4] of the test pixels T1 - T4 are given as follows;

$$|TD2[T1] - DI[T1]| = |255 - 255| = 0$$

$$|TD2[T2] - DI[T2]| = |127.5 - 255| = 127.5$$

$$|TD2[T3] - DI[T3]| = |0 - 0| = 0$$

$$|TD2[T4] - DI[T4]| = |0 - 0| = 0$$

Relations between these absolute values and the threshold values TH1 (TH1 = 50) and TH2 (TH1 = 100) are given as follows;

$$|TD2[T1] - DI[T1]| < TH1$$

$$TH2 \leq |TD2[T2] - DI[T2]|$$

$$TH2 \leq |TD2[T3] - DI[T3]|$$

$$|TD2[T4] - DI[T4]| < TH1$$

Therefore, the determination data calculated for the rightward up averaging interpolation circuit 6 are given as follows;

$$M2[T1] = -1$$

$$M2[T2] = 1$$

$$M2[T3] = -1$$

$$M2[T4] = -1$$

Fig. 20 is a table showing values of the ternarized determination data M1 and M2 for the test pixels T1 - T4.

The control circuit 1 adds up the ternarized determination data M1[T1] -M1[T4], and calculates the evaluation data S1 for the left/right averaging interpolation circuit 5.

The evaluation data S1 is given as follows;

$$S1 = M1[T1] + M1[T2] + M1[T3] + M1[T4]$$

$$= (-1) + 1 + 1 + (-1)$$

$$= 0$$

Similarly, the control circuit 1 adds up the determination data M2[T1] - M2[T4], and calculates the evaluation data S2 for evaluating the rightward up averaging interpolation circuit 6.

The evaluation data S2 is given as follows;

$$S2 = M2[T1] + M2[T2] + M2[T3] + M2[T4]$$

$$= (-1) + 1 + (-1) + (-1)$$

$$= -2$$

Fig. 21 is a table showing the evaluation data S1 of the left/right averaging interpolation circuit 5 and the evaluation data S2 of the rightward up averaging interpolation circuit 6. As shown in Fig. 21, the evaluation data S2 calculated for the rightward up averaging interpolation circuit 6 has the smallest value. The smaller the difference between the test interpolation data and actual image data is, the smaller the evaluation data becomes. Because, the original image data illustrated in Fig. 9 (a) represents a rightward up outline, the rightward up average interpolation circuit 6 is estimated to have high interpolation aptitude. The evaluation data S2 has the smallest value as shown in Fig. 14, indicating that the interpolation aptitude of the rightward up averaging interpolation circuit 6 is high, which means the interpolation method can be properly selected even if the determination data is ternarized.

In the above explanation, the determination data is ternarized using two threshold values. The data volume of the determination data can be also decreased by binarizing them using one threshold value or by decreasing the number of bits.

The pixel interpolation circuit according to this invention may be configured by either hardware or software, or may be configured with both hardware and software being properly mixed.

**Claims**

**1.**    A pixel interpolation circuit for generating interpolation pixel data which interpolates an input image based on pixel data composing the input image, the pixel interpolation circuit comprising:

a plurality of interpolation circuits each calculating interpolation candidate data of a interpolation pixel and test interpolation data of a plurality of pixels neighboring the interpolation pixel, using different interpolation methods;

a determining circuit for selecting one of the interpolation circuits based on a difference between the test interpolation data and actual pixel data; and

an output circuit for outputting the interpolation candidate data calculated by the selected interpolation circuit as the interpolation pixel data.

2. A pixel interpolation circuit according to claim 1, wherein the determining circuit calculates a evaluation data for each of the interpolation circuits, by summing up the absolute values of the difference between the test interpolation data and the actual pixel data, and selects one of the interpolation circuits based on the evaluation data.

3. A pixel interpolation circuit according to claim 1, wherein the determining circuit calculates binarized or ternarized values of the difference between the test interpolation data and the actual pixel data.

4. A pixel interpolation method for generating interpolation pixel data which interpolates an input image based on pixel data composing the input image, the pixel interpolation method comprising:

calculating interpolation candidate data of a interpolation pixel and test interpolation data of a plurality of pixels neighboring the interpolation pixel, using different interpolation methods;

selecting one of the interpolation methods based on a difference between the test interpolation data and actual pixel data; and

outputting the interpolation candidate data calculated by the selected interpolation method as the interpolation pixel data.

5. A pixel interpolation method according to claim 4 further comprising,

calculating a evaluation data for each of the interpolation methods, by summing up the absolute values of the difference between the test interpolation data and the actual pixel data, wherein the interpolation method is selected based on the evaluation data.

6. A pixel interpolation circuit according to claim 4 further comprising,

calculating binarized or ternarized values of the difference between the test interpolation data and the actual pixel data.

7. An image scanner comprising a pixel interpolation circuit according to claims 1.

# FIG.1

# FIG.2

```
                    ┌──────────────┐
                    │    Start     │
                    └──────┬───────┘
                           │
        S1  ┌──────────────────────────────────┐
            │   Test Interpolation Calculation │
            └──────────────┬───────────────────┘
                           │
        S2  ┌──────────────────────────────────┐
            │   Determination Data Calculation │
            └──────────────┬───────────────────┘
                           │
        S3         ╱────────────────╲          No
                  ╱  Last Test Pixel? ╲──────────►
                  ╲                  ╱
                   ╲────────────────╱
                           │ Yes
        S4  ┌──────────────────────────────────────┐
            │ Interpolation Candidate Data Calculation │
            └──────────────┬───────────────────────┘
                           │
        S5         ╱──────────────────────╲      No
                  ╱ Last Interpolation Circuit? ╲────►
                  ╲                      ╱
                   ╲────────────────────╱
                           │ Yes
        S6  ┌──────────────────────────────────┐
            │     Evaluation Data Calculation  │
            └──────────────┬───────────────────┘
                           │
        S7  ┌──────────────────────────────────┐
            │  Select Interpolation Candidate Data │
            └──────────────┬───────────────────┘
                           │
        S8         ╱──────────────────────╲      No
                  ╱  Last Interpolation Pixel? ╲───►
                  ╲                      ╱
                   ╲────────────────────╱
                           │ Yes
                    ┌──────────────┐
                    │     End      │
                    └──────────────┘
```

# FIG.3

(a)

(b)

# FIG.4

Start

|     |     |
|-----|-----|
| S21 | Calculate Absolute Values Of Difference Between Test Interpolation Data TDn[Tm] And Image Data DI[Tm] |

|     |     |
|-----|-----|
| S22 | Out Put Determination Data Mn[Tm] (Mn[Tm]= $\mid$ TDn[Tm]−DI[Tm] $\mid$ ) |

End

# FIG.5

|  | $T_1$ | $T_2$ | ...... | $T_m$ |
|---|---|---|---|---|
| 1st Interpolation Circuit | M1[$T_1$] | M1[$T_2$] | ...... | M1[$T_m$] |
| 2nd Interpolation Circuit | M2[$T_1$] | M2[$T_2$] | ...... | M2[$T_m$] |
| ⋮ | ⋮ | ⋮ |  | ⋮ |
| nth Interpolation Circuit | Mn[$T_1$] | Mn[$T_2$] | ...... | Mn[$T_m$] |

# FIG.6

Start

S61 — Calculate Evaluation Data
Sn=Mn[T1]+Mn[T2]+···+Mn[Tm]

S62 — Last Interpolation Circuit? — No

Yes

S63 — Select minimum Evaluation Data Sx from S1-Sn

S64 — Specify Interpolation Calculating Circuit 4x
Corresponding to evaluation data Sx

S65 — Output Selection Signal C For Selecting
Interpolation Candidate Data Dx Calculated
By Interpolation Calculating Circuit 4x

End

# FIG.7

| | |
|---|---|
| 1st Interpolation Circuit | S1 |
| 2nd Interpolation Circuit | S2 |
| ⋮ | ⋮ |
| nth Interpolation Circuit | Sn |

# FIG.8

# FIG.9

(a)

LL

(b)

T1  T2  L  T3  T4

# FIG.10

# FIG.11

(a)

T1B  T1  T1E

(b)

T2B    T2      T2E

(c)

T3B        T3   T3E

(d)

T4B  T4  T4E

(e)

LB       L  LE

# FIG.12

(a)

(b)

(c)

(d)

(e)

# FIG.13

|      | T1  | T2    | T3    | T4  |
| ---- | --- | ----- | ----- | --- |
| M1   | 0   | 127.5 | 127.5 | 0   |
| M2   | 0   | 127.5 | 0     | 0   |

# FIG.14

| S1 | 255   |
| -- | ----- |
| S2 | 127.5 |

# FIG.15

# FIG.16

# FIG.17

FIG.18

| | T1 | T2 | T3 | T4 |
|---|---|---|---|---|
| M1 | 0 | 127.5 | 127.5 | 0 |
| M2 | 127.5 | 127.5 | 127.5 | 0 |
| M3 | 0 | 127.5 | 0 | 0 |

FIG.19

| S1 | 0 |
|---|---|
| S2 | -2 |

FIG.20

| | T1 | T2 | T3 | T4 |
|---|---|---|---|---|
| M1 | -1 | 1 | 1 | -1 |
| M2 | -1 | 1 | -1 | -1 |

FIG.21

| S1 | 255 |
|---|---|
| S2 | 382.5 |
| S3 | 127.5 |

## INTERNATIONAL SEARCH REPORT

| | International application No. |
|---|---|
| | PCT/JP2004/009179 |

A. CLASSIFICATION OF SUBJECT MATTER
Int.Cl⁷ H04N1/40, H04N1/387, G06T3/40, H04N5/262

According to International Patent Classification (IPC) or to both national classification and IPC

B. FIELDS SEARCHED

Minimum documentation searched (classification system followed by classification symbols)
Int.Cl⁷ H04N1/40-1/409, H04N1/46, H04N1/60

Documentation searched other than minimum documentation to the extent that such documents are included in the fields searched
Jitsuyo Shinan Koho          1922-1996     Toroku Jitsuyo Shinan Koho     1994-2003
Kokai Jitsuyo Shinan Koho     1971-2003     Jitsuyo Shinan Toroku Koho      1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-321944 A  (Kokusai Electric Co., Ltd.), 03 December, 1996 (03.12.96), Full text (Family: none) | 1-7 |
| A | JP 2001-307079 A  (Seiko Epson Corp.), 02 November, 2001 (02.11.01), Full text (Family: none) | 1-7 |
| A | JP 2002-27325 A  (Victor Company Of Japan, Ltd.), 25 January, 2002 (25.01.02), Full text (Family: none) | 1-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 10 September, 2004 (10.09.04) | Date of mailing of the international search report 28 September, 2004 (28.09.04) |
|---|---|
| Name and mailing address of the ISA/ Japanese Patent Office | Authorized officer |
| Facsimile No. | Telephone No. |

Form PCT/ISA/210 (second sheet) (January 2004)

# EP 1 672 907 A1

| INTERNATIONAL SEARCH REPORT | International application No. |
|---|---|
| | PCT/JP2004/009179 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-24883 A (Fuji Photo Film Co., Ltd.),<br>26 January, 2001 (26.01.01),<br>Full text<br>(Family: none) | 1-7 |
| A | JP 2003-78821 A (Hitachi Kokusai Electric Inc.),<br>14 March, 2003 (14.03.03),<br>Full text<br>& US 2003-43286 A1 | 1-7 |
| A | JP 2002-165092 A (Canon Inc.),<br>07 June, 2002 (07.06.02),<br>Full text<br>(Family: none) | 1-7 |

Form PCT/ISA/210 (continuation of second sheet) (January 2004)